# EUROPÄISCHE PATENTSCHRIFT

(11) **EP 2 169 209 B1**
(45) Veröffentlichungstag und Bekanntmachung des Hinweises auf die Patenterteilung: **19.01.2011**
(21) Anmeldenummer: 09009307.1
(22) Anmeldetag: 17.07.2009
(51) Int. Cl.: F02M 35/04, F02M 35/16, B60T 17/02, B60T 17/04

(54) **Anordnung einer Luftmassen-Durchflussmesseinrichtung in einem Ansaugsystem einer Brennkraftmaschine**
Assembly of an air mass flow measuring device in an intake system of a combustion engine
Agencement d'un dispositif de mesure de débit de masses d'air dans un système d'aspiration d'un moteur à combustion interne

(30) Priorität: 30.09.2008 DE 102008049806
(43) Veröffentlichungstag der Anmeldung: 31.03.2010
(73) Patentinhaber: MAN Nutzfahrzeuge Aktiengesellschaft, 80995 München (DE)
(72) Erfinder: Gerdiken, Karl Josef, 90530 Wendelstein (DE)

(56) Entgegenhaltungen:
- EP-A- 0 095 516
- EP-A- 0 531 858
- EP-A- 1 577 534
- WO-A-2007/031401
- WO-A-2009/146866
- DE-A1- 3 218 183
- DE-A1- 10 230 430
- DE-B- 1 007 113
- GB-A- 2 171 768

## Beschreibung

Die vorliegende Erfindung betrifft die Anordnung einer Luftmassen-Durchflussmesseinrichtung in einem Ansaugsystem einer Brennkraftmaschine, insbesondere für Nutz- und/oder Kraftfahrzeuge, gemäß dem Oberbegriff des Anspruches 1.

Zur genauen Messung der Luftmassen von Verbrennungsluft für Brennkraftmaschinen sind Luftmassenmesser bzw. Luftmassensensoren bekannt, die zum Beispiel nach der Hitzfilmanemometrie oder nach dem Ultraschallprinzip messen. Wichtig dabei ist, dass die in die Ansaugleitung eingesetzten Luftmassenmesser möglichst gleichmäßig entfeuchtet und turbulenzfrei angeströmt werden, um über die abzudeckenden Massenströme genaue Messwerte zu erzielen.

Beispielsweise ist es aus der DE 103 56 833 A1 bekannt, den Luftmassenmesser stromab mehrerer plattenförmiger Filterelemente in eine an das Luftfiltergehäuse unmittelbar anschließende Ansaugleitung einzusetzen, die durch eine etwa 90 Grad abknickende Luftführung Wasserpartikel von dem Luftmassenmesser fernhalten soll. Ferner sind an der Einströmöffnung der Ansaugleitung Umlenkelemente und ein Einströmgitter angeordnet, die ebenfalls feuchtigkeitsabscheidend wirken sollen.

Weiterhin ist es aus der EP 95 516 A1 eine Anordnung mit einer Luftmassen-Durchflussmesseinrichtung in einem Ansaugsystem einer Brennkraftmaschine bekannt, wobei der Luftmassensensor in eine reinluftseitige Ansaugleitung stromab eines Luftfilters eingesetzt ist. Die reinluftseitige Ansaugleitung ragt mit einem geradlinig verlaufenden Ansaugleitungsendabschnitt in den durch einen rohrförmigen Hohlzylinder gebildeten Luftfilter hinein, wobei das Luftmassensensorelement im Inneren des Ansaugleitungsendabschnittes angeordnet ist.

Die DE 32 18 183 A1 betrifft ein aus baulichen Gründen kurzes Luftsaugrohr für eine Brennkraftmaschine mit zwei nahe beieinander in diesem mündende Anschlüsse für einen Luftpresser und die Kurbelgehäuseentlüftung, wobei im Luftsaugrohr zwischen den beiden Anschlüssen zur Abschirmung der vom Luftpresser angesaugten Luft gegenüber der von der Kurbelgehäuseentlüftung zum Saugrohr gelangenden Ölhaltigen Luft eine Trennwand angeordnet Ist.

Aufgabe der Erfindung ist es, eine Anordnung einer Luftmassen-Durchflussmesseinrichtung im Ansaugsystem einer Brennkraftmaschine vorzuschlagen, die bei baulich einfacher Gestaltung eine besonders wirksame Strömungsberuhigung der Verbrennungsluft und besonders konstante Messergebnisse über den Drehzahlbereich der Brennkraftmaschine ermöglicht.

Diese Aufgabe wird erfindungsgemäß mit den Merkmalen des Patentanspruches 1 gelöst. Vorteilhafte Weiterbildungen der Erfindung sind Gegenstand der Unteransprüche.

Dabei ist vorgeschen dass das wenigstens eine Luftmassensensorelement im Inneren des Luftfilterelementes in einem dort ausgebildeten Aufnahmeraum aufgenommen und angeordnet ist, der damit gleichzeitig einen Reinluftraum ausbildet. Das Luftfilterelement ist durch ein rohrförmiges Trommel- oder Hohlzylinderluftfilterelement gebildet. Weiterhin ragt die reinluftseitige Ansaugleitung mit einem bevorzugt in etwa geradlinig verlaufenden Ansaugleitungsendabschnitt in den Aufnahmeraum als Reinluftraum des Luftfilterelementes ein, so dass dann das wenigstens eine Luftmassensensorelement im Inneren des Ansaugleitungsendabschnittes aufgenommen und angeordnet ist. Eine dem Luftmassensensorelement zugeordnete elektronische Erfassungseinrichtung kann dabei auch außerhalb des Ansaugrohres untergebracht sein.

Es hat sich gezeigt, dass mit dieser Kombination eine besonders gleichmäßige und günstige Anströmung der Ansaugleitung verwirklichbar ist, die genaue Messwerte mit einem in dem Luftfilterelement positionierten, bevorzugt zudem auch noch in die zentrale Ansaugleitung integrierten Luftmassensensorelement ermöglicht. Dabei hat es sich zudem als vorteilhaft erwiesen, dass die Umlenkung der vom Luftfilterelement zentripetal abströmenden Verbrennungsluft zur Ansaugleitung nicht asymmetrisch, sondern über den Umfang der Ansaugöffnung verteilt symmetrisch erfolgt.
Insbesondere kann das Luftmassensensorelement etwa mittig der Strecke des geradlinigen Abschnittes der Ansaugleitung positioniert sein, so dass deren stromauf und stromab des Luftmassensensorelementes liegende Abschnitte gleichermaßen turbulentfrei durchströmt und störende Luftschwingungen weitgehendst eliminiert werden.

Des Weiteren kann sich der geradlinige Abschnitt der Ansaugleitung über etwa 2/3 der Länge des trommelförmigen Luftfilterelementes erstrecken, um sowohl eine ungehinderte Einströmung der Verbrennungsluft einerseits als auch eine vorteilhafte Strömungsberuhigung andererseits sicherzustellen. Des weiteren besteht auch die Option, dass Strömungsberuhigungselemente, z. B. Strömungsgleichrichter oder dergleichen, in dem Einlauftrichter bzw. im ansaugleitungsendabschnitt stromauf des Luftmassensensorelementes angeordnet werden.

Die Einströmöffnung der Ansaugleitung kann in an sich bekannter Weise trompetenförmig erweitert, insbesondere jedoch lavalförmig ausgeführt sein. Damit gelingt es, unter Berücksichtigung günstiger Strömungsverhältnisse und ohne Druckverluste, die Verbrennungsluft aus dem Reinluftraum als Aufnahmeraum des Luftfilterelementes in die Ansaugleitung zu überführen.

Bei einer weiteren Entnahme von Luft aus dem Luftfiltergehäuse mit einer entsprechenden Luftführungsleitung erfolgt deren Mündung in den Reinluftraum an der von der Ansaugöffnung der Ansaugleitung abgewandten Stirnseite des Luftfiltergehäuses, um somit störende Einflüsse durch ggf. ungleichmäßig angesaugte Luft auszuschließen. Die Luftentnahme kann zum Beispiel zur Versorgung eines Luftpressers einer Druckluft-Bremsanlage des Kraftfahrzeuges oder anderer Verbraucher dienen.

Dabei kann baulich und fertigungstechnisch günstig die Luftführungsleitung parallel zur Ansaugleitung innerhalb eines Abschnittes des Luftfiltergehäuses verlaufen und durch eine Stirnwand des Abschnittes hindurch geführt sein.

Schließlich kann in dem Abschnitt des Luftfiltergehäuses ferner die Ansaugleitung in einen z. B. 90°-Bogen zum Anschluss an eine motorseitige Verbrennungsluftleitung übergehen, woraus eine montagegünstige und im Kraftfahrzeug in einem Motorraum baulich vorteilhafte Anordnung des Luftfiltergehäuses mit anschließender, motorseitiger Verbrennungsluftleitung resultiert.

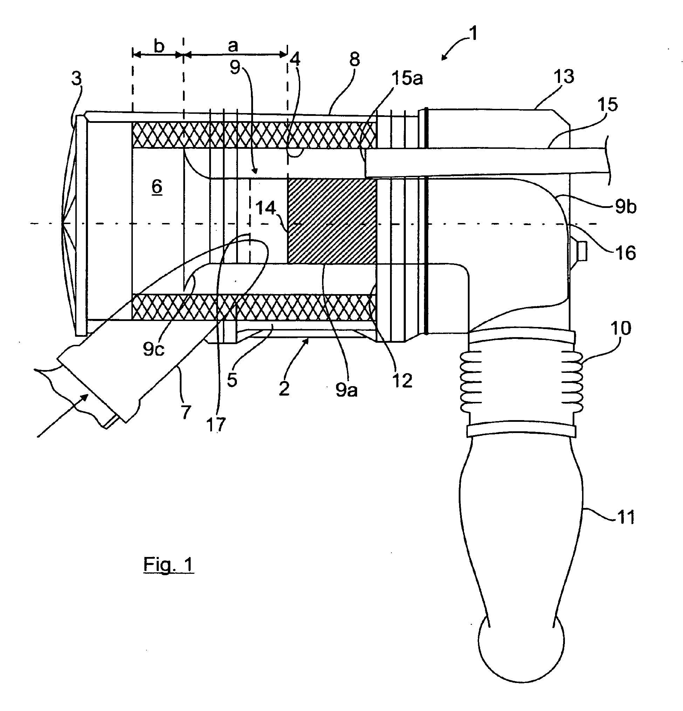

Ein Ausführungsbeispiel der Erfindung ist im Folgenden anhand der beiliegenden Zeichnung näher erläutert. Die einzige Figur zeigt eine teilweise im Längsschnitt dargestellte Luftfilteranordnung mit einem integriertem Luftmassensensorelement eines Ansaugsystems für Brennkraftmaschinen in Kraftfahrzeugen.

In der Zeichnung ist mit 1 eine Luftfilteranordnung für Brennkraftmaschinen in Kraftfahrzeugen bezeichnet, in deren im Wesentlichen zylindrischem Luftfiltergehäuse 2 über einen stirnseitigen Deckel 3 ein trommelförmiges Luftfilterelement 4 eingesetzt ist.

Das Luftfilterelement 4 unterteilt das Luftfiltergehäuse 2 in einen radial äußeren, ringförmigen Rohluftraum 5 und einen innerhalb des Luftfilterelementes 4 liegenden Reinluftraum, der, wie dies nachfolgend noch näher beschrieben wird, gleichzeitig einen Luftfilter-Aufnahmeraum 6 für ein Luftmassensensorelement 14 einer Durchflussmesseinrichtung ausbildet.

Der außerhalb des Luftfilterelementes 4 gebildete Rohluftraum 5 ist mit einer tangential in den Gehäusemantel 8 des Luftfiltergehäuses 2 einmündenden Luftzuführleitung 7 verbunden, wobei die Luftzuführleitung 7 Teil eines Geräuschdämpfers und/oder Wasserabscheiders des Ansaugsystems des Kraftfahrzeuges sein kann.

Innerhalb des trommelförmigen Luftfilterelementes 4 ist in zentraler Ausrichtung eine Ansaugleitung 9 vorgesehen, die sich aus einem geradlinigen Ansaugleitungsendabschnitt 9a und aus einem sich daran in Strömungsrichtung anschließenden 90°-Bogen 9b zusammensetzt.

An den 90°-Bogen 9b ist über eine gummielastische Manschette 10 eine motorseitige Verbrennungsluftleitung 11 angeschlossen, die die angesaugte Verbrennungsluft zu den Verdichtern, z. B. bei einer 2-stufigen Aufladung, der Brennkraftmaschine oder zu einem nicht dargestellten Ansaugluftverteiler weiterleitet.

Der geradlinige Ansaugleitungsendabschnitt 9a der Ansaugleitung 9 erstreckt sich dabei durch eine den Reinluftraum bzw. Aufnahmeraum 6 abschließende Stirnwand 12 des Luftfiltergehäuses 2 und geht in einem nachgeschalteten Abschnitt 13 des Luftfiltergehäuses 2 in den 90°-Bogen 9b über, an den dann die Verbrennungsluftleitung 11 entsprechend angeschlossen ist.

In die Ansaugleitung 9 bzw. deren geradlinigem Ansaugleitungsabschnitt 9a ist ein nur angedeutetes Luftmassenserisorelement 14 eingesetzt, das den angesaugten Luftmassenstrom an Verbrennungsluft misst und auf der Basis der ermittelten Massenströme über das Motorsteuergerät u.a. die zuzuführende Kraftstoffmenge berechnet.

Das Luftmassensensorelement 14 kann nach dem Prinzip der Hitzfilmanemometrie oder nach dem Ultraschallprinzip oder nach anderen bekannten Prinzipien den Durchsatz an Verbrennungsluft erfassen. Eine dem Luftmassensensorelement 14 zugeordnete elektronische Erfassungseinrichtung, die hier nicht dargestellt ist, ist bevorzugt außerhalb des Luftfiltergehäuses 2 bzw. außerhalb der Ansaugleitung 9 angeordnet.

Zur Erzielung genauer Durchsatzmengen an Verbrennungsluft innerhalb der Ansaugleitung 9 ist das Luftmassensensorelement 14 etwa in einem mittleren Bereich des geradlinigen Ansaugleitungsendabschnittes 9a der Ansaugleitung 9. positioniert und weist einen definierten Abstand a von einer Ansaugöffnung 9c des Ansaugleitungsendabschnittes 9a auf.

Ferner ist die Ansaugöffnung 9c der Ansaugleitung 9 - wie aus der Zeichnung ersichtlich ist - trompetenförmig bzw. lavalförmig ausgeführt.

Der geradlinige Ansaugleitungsendabschnitt 9a der Ansaugleitung 9 erstreckt sich zudem über zumindest etwa 2/3 der Länge des trommelförmigen Luftfilterelementes 4 bzw. des Aufnahmeraumes 6, so dass die Ansaugöffnung 9c einen definierten Abstand b von einem stirnseitigen Endbereich des Luftfilterelementes 4 aufweist. Alternativ oder zusätzlich können auch hier lediglich strichliert und schematisch angedeutete Strömungsgleichrichter 17 als Strömungsberuhigungselemente vorgesehen sein.

Diese Maßnahmen tragen dazu bei, dass das innerhalb der Luftfilteranordnung 1 in die Ansaugleitung 9 bzw. in den Ansaugleitungsendabschnitt 9a eingesetzte Luftmassensensorelement 14 strömungsberuhigt und turbulenzfrei angeströmt wird und dementsprechend über das gesamte Drehzahlband der Brennkraftmaschine bzw. über das gesamte Spektrum an Massenströmen von Verbrennungsluft weitgehendst genaue Messwerte liefert.

Die tangentiale Zuführung der angesaugten Verbrennungsluft in den ringförmigen Rohluftraum 3 und die anschließende, im Wesentlichen zentripetale Durchströmung des trommelförmigen Luftfilterelementes 4 bewirken eine weitgehende Abscheidung von Schmutzpartikeln.
In die Stirnseite 12 des Gehäuses 2 mündet des weiteren eine Luftführungsleitung 15, die im Wesentlichen parallel und geradlinig zum Ansaugleitungsendabschnitt 9a verlegt ist und die nach deren Durchführung durch die weitere Stirnwand 16 des Abschnittes 13 des Luftfiltergehäuses 2 an ein Versorgungssystem des Kraftfahrzeuges mit einem Kompressor in nicht dargestellter Weise angeschlossen ist.

Über die wie ersichtlich mit ihrer Mündungsstelle 15a an der Stirnseite 12 des Gehäuses 2 der Luftfilteranordnung 1 angeordnete Luftführungsleitung 15 kann das besagte Versorgungssystem gefilterte Luft ansaugen, wobei durch die definierte, möglichst große, räumliche Entfernung zwischen der Ansaugöffnung 9c der Ansaugleitung 9 und der Mündungsstelle 15a der Luftführungsleitung 15 sichergestellt ist, dass sich keine störenden Luftschwingungen zum Luftmassensensorelement 14 fortpflanzen können.

## Patentansprüche

1. Anordnung einer Luftmassen-Durchflussmesseinrichtung in einem Ansaugsystem einer Brennkraftmaschine, wobei wenigstens ein Luftmassensensorelement (14) in eine reinluftseitige Ansaugleitung stromab zumindest eines Luftfilterelementes (4) eingesetzt ist, wobei
- das wenigstens eine Luftmassensensorelement (14) in einem im Inneren des Luftfilterelementes (4) ausgebildeten Aufnahmeraum (6) aufgenommen und angeordnet ist,
- das Luftfilterelement (4) durch ein rohrförmiges Trommel- oder Hohlzylinderluftfilterelement gebildet ist,
- die reinluftseitige Ansaugleitung (9) mit einem bevorzugt in etwa geradlinig verlaufenden Ansaugleitungsendabschnitt (9a) in den Aufnahmeraum (6) des Luftfilterelementes (4) einragt,
- das wenigstens eine Luftmassensensorelement (14) im Inneren des Ansaugleitungsendabschnittes (9a) aufgenommen und angeordnet ist,
**dadurch gekennzeichnet, dass**
- zur Entnahme von Luft aus der reinluftseitigen Ansaugleitung (9) eine Luftführungsleitung (15) auf einer einer Ansaugöffnung (9c) der Ansaugleitung (9) abgewandten Seite (12) in den einen Reinluftraum ausbildenden Aufnahmeraum (6) einmündet.

2. Anordnung nach Anspruch 1, **dadurch gekennzeichnet, dass** das Luftfilterelement (4) in einem Luftfiltergehäuse (2) aufgenommen ist, in das im Außenumfangsbereich eine Luftzuführleitung (7) einmündet.

3. Anordnung nach Anspruch 2, **dadurch gekennzeichnet, dass** zwischen einem vorgegebenen Luftfiltergehäuse-Innenumfangswandbereich und einem vorgegebenem Luftfilterelement-Außenumfangswandbereich ein in der Art eines Radialspaltes ausgebildeter Rohluftraum (5) ausgebildet ist.

4. Anordnung nach einem der Ansprüche 1 bis 3, **dadurch gekennzeichnet, dass** das Luftmassensensorelement (14) einen vorgegebenen Abstand (a) von einer Ansaugöffnung (9c) des Ansaugleitungsendabschnittes (9a) aufweist, vorzugsweise in etwa in einem mittleren Bereich eines bevorzugt geradlinig ausgebildeten Ansaugleitungsendabschnittes (9a) eingesetzt ist.

5. Anordnung nach einem der Ansprüche 1 bis 4, **dadurch gekennzeichnet, dass** eine Ansaugöffnung (9c) des Ansaugleitungsendabschnittes (9a) einen definierten Abstand (b) von einem stirnseitigen Endbereich des Luftfilterelementes (4) aufweist, vorzugsweise sich in etwa über 2/3 der Länge des Luftfilterelementes (4) und/oder des Aufnahmeraumes (6) erstreckt, und/oder dass im Ansaugleitungsendabschnitt (9a) wenigstens ein Strömungsberuhigungselement (17) angeordnet ist.

6. Anordnung nach einem der vorhergehenden Ansprüche, **dadurch gekennzeichnet, dass** der Ansaugleitungsendabschnitt (9a) zur Ansaugöffnung (9c) hin trompetenförmig erweitert ist.

7. Anordnung nach Anspruch 6, **dadurch gekennzeichnet, dass** der Ansaugleitungsabschnitt (9a) zur Ansaugöffnung (9c) hin lavalförmig ausgebildet ist.

8. Anordnung nach einem der vorhergehenden Ansprüche, **dadurch gekennzeichnet, dass** die Luftführungsleitung (15) parallel zum in etwa geradlinig verlaufenden Ansaugleitungsendabschnitt (9a) verläuft und durch eine Stirnwand (16) des Luftfiltergehäuseabschnittes (13) hindurchgeführt ist.

9. Anordnung nach Anspruch 8, **dadurch gekennzeichnet, dass** der Ansaugleitungsendabschnitt (9a) in dem Luftfiltergehäuseabschnitt (13) in einen vorzugsweise um in etwa 90° gekrümmten Bogen (9b) zum Anschluss an eine motorseitige Verbrennungsluftleitung (10, 11) übergeht.

## Claims

1. An arrangement of an air mass flow measuring device in an intake system of a combustion engine, wherein at least one air mass sensor element (14) is inserted into an intake line, located on the clean air side, so as to be downstream of at least one air filter element (4), wherein
- the at least one air mass sensor element (14) is received and arranged in a receiving chamber (6) formed in the interior of the air filter element (4),
- the air filter element (4) is formed by a drum air filter element or a hollow-cylinder air filter element, both being tubular,
- the intake line (9) located on the clean air side projects into the receiving chamber (6) of the air filter element (4) by means of an intake line end portion (9a) preferably running substantially rectilinearly,
- the at least one air mass sensor element (14) is received and arranged in the interior of the intake line end portion (9a),
**characterised in that**
- for the removal of air from the intake line (9), located on the clean air side, an air-guiding line (15) issues into the receiving chamber (6), forming a clean air chamber, on a side (12) remote from an intake opening (9c) of the intake line (9).

2. An arrangement according to claim 1, **characterised in that** the air filter element (4) is received in an air filter housing (2) into which an air-feeding line (7) issues in the outer circumferential region.

3. An arrangement according to claim 2, **characterised in that** a raw air chamber (5) formed in the manner of a radial gap is formed between a given inner circumferential wall region of the air filter housing and a given outer circumferential wall region of the air filter element.

4. An arrangement according to any one of claims 1 to 3, **characterised in that** the air mass sensor element (14) is at a given distance (a) from an intake opening (9c) of the intake line end portion (9a), is preferably inserted substantially in a central region of a preferably rectilinear intake line end portion (9a).

5. An arrangement according to any one of claims 1 to 4, **characterised in that** an intake opening (9c) of the intake line end portion (9a) is at a defined distance (b) from a frontal end region of the air filter element (4), preferably extends over substantially 2/3 of the length of the air filter element (4) and/or of the receiving chamber (6), and/or **in that** at least one flow-calming element (17) is arranged in the intake line end portion (9a).

6. An arrangement according to any one of the preceding claims, **characterised in that** the intake line end portion (9a) is widened in a trumpet-like manner towards the intake opening (9c).

7. An arrangement according to claim 6, **characterised in that** the intake line portion (9a) is Laval-shaped towards the intake opening (9c).

8. An arrangement according to any one of the preceding claims, **characterised in that** the air-guiding line (15) runs parallel to the substantially rectilinearly running intake line end portion (9a) and is guided through an end wall (16) of the air filter housing portion (13).

9. An arrangement according to claim 8, **characterised in that** in the air filter housing portion (13), the intake line end portion (9a) becomes a bend (9b), preferably curved through substantially 90°, for connection to a combustion air line (10, 11) located at the side closest to the engine.

## Revendications

1. Montage d'une installation de mesure de débit massique d'air dans un système d'admission d'un moteur thermique selon laquelle au moins un élément de capteur massique d'air (14) est prévu dans une conduite d'aspiration, côté air filtré, en aval d'au moins un élément de filtre à air (4),
montage dans lequel
- au moins l'élément de capteur massique d'air (14) est logé et installé dans une chambre de réception (6) réalisée à l'intérieur de l'élément de filtre à air (4),
- l'élément de filtre à air (4) est constitué par un élément de filtre à air en forme de cylindre ou de tambour, tubulaire,
- la conduite d'aspiration (9) du côté de l'air filtré pénètre avec un segment d'extrémité de conduite d'aspiration (9a) dirigé de manière préférentielle, sensiblement en ligne droite, dans la chambre de réception (6) de l'élément de filtre à air (4),
- au moins l'élément de capteur de masse d'air (14) est logé et installé à l'intérieur du segment d'extrémité de la conduite d'aspiration (9a),
**caractérisé en ce que**
pour prélever de l'air de la conduite d'aspiration (9), côté air filtré, une conduite d'air (15) débouche sur le côté (12) opposé à l'orifice d'aspiration (9c) de la conduite d'aspiration (9) dans la chambre de réception (6) constituant l'espace d'air filtré.

2. Montage selon la revendication 1,
**caractérisé en ce que**
l'élément de filtre à air (4) est logé dans un boîtier de filtre à air (2) dans lequel débouche une conduite d'alimentation en air (7), dans la zone périphérique extérieure.

3. Montage selon la revendication 2,
**caractérisé en ce qu'**
une chambre à air non filtré (5) réalisée sous la forme d'un intervalle radial, est prévue entre la zone de paroi périphérique intérieure de boitier de filtre à air et la zone de paroi périphérique extérieure de l'élément de filtre à air, prédéfinie, réalisée à la manière d'un intervalle radial.

4. Montage selon l'une des revendications 1 à 3,
**caractérisé en ce que**
l'élément de capteur de masse d'air (14) se trouve à une distance (a) prédéfinie de l'orifice d'aspiration (9c) du segment d'extrémité de conduite d'aspiration (9a), de préférence sensiblement dans la zone médiane d'un segment d'extrémité de conduite d'admission (9a) de préférence en ligne droite.

5. Montage selon l'une des revendications 1 à 4,
**caractérisé en ce qu'**
un orifice d'aspiration (9c) du segment d'extrémité de la conduite d'aspiration (9a) est à une distance définie (b) de la zone d'extrémité coté frontal de l'élément de filtre à air (4), en s'étendant de préférence sur environ 2/3 de la longueur de l'élément de filtre à air (4) et/ou de la chambre de réception (6) et/ou le segment d'extrémité de la conduite d'admission (9a) comporte au moins un élément pour calmer l'écoulement (17).

6. Montage selon l'une des revendications précédentes,
**caractérisé en ce que**
le segment d'extrémité de la conduite d'admission (9a) s'élargit en forme de trompette vers l'orifice d'aspiration (9c).

7. Montage selon la revendication 6,
**caractérisé en ce que**
le segment de conduite d'aspiration (9a) est réalisé sous la forme d'une buse de Laval vers l'orifice d'admission (9c).

8. Montage selon l'une des revendications précédentes,
**caractérisé en ce que**
la conduite d'alimentation en air (15) est parallèle sensiblement du segment d'extrémité de la conduite d'admission (9a), dirigée verticalement, et traversant la paroi frontale (16) du segment de boîtier de filtre à air (13).

9. Montage selon la revendication 8,
**caractérisé en ce que**
le segment d'extrémité de la conduite d'admission (9a) rejoint dans le segment de boîtier de filtre à air (13), un coude (9b) de préférence cintré d'environ 90° par rapport au branchement à une conduite de ventilation (10, 11) de combustion, côté moteur.
